# EUROPÄISCHE PATENTSCHRIFT

(11) **EP 3 529 504 B1**
(45) Veröffentlichungstag und Bekanntmachung des Hinweises auf die Patenterteilung: **01.07.2020**
(21) Anmeldenummer: 17786888.2
(22) Anmeldetag: 12.10.2017
(51) Int. Cl.: F16B 7/06, F16G 11/12

(54) **SPANNVORRICHTUNG FÜR SEILE UND KETTEN, MIT GEWINDESPINDEL UND RATSCHENEINHEIT**
TENSIONING DEVICE FOR ROPES AND CHAINS, COMPRISING A LEAD SCREW AND RATCHET UNIT
DISPOSITIF TENDEUR POUR DES CÂBLES ET DES CHAÎNES, MUNI D'UNE BROCHE FILETÉE ET D'UN ENSEMBLE LANTERNE

(30) Priorität: 20.10.2016 DE 202016006553 U
(43) Veröffentlichungstag der Anmeldung: 28.08.2019
(73) Patentinhaber: Westdeutscher Drahtseil-Verkauf Dolezych GmbH & Co. KG, 44147 Dortmund (DE)
(72) Erfinder: REDDER, Manfred, 59379 Selm (DE)
(74) Vertreter: Andrejewski - Honke Patent- und Rechtsanwälte Partnerschaft mbB
(86) Internationale Anmeldenummer: PCT/EP2017/076100
(87) Internationale Veröffentlichungsnummer: WO 2018/073098

(56) Entgegenhaltungen:
- DE-A1- 2 310 152
- GB-A- 1 475 254
- US-A- 2 420 364
- US-A- 4 130 269

## Beschreibung

Die Erfindung betrifft einen Ratschenspanner zum Spannen von Kette, Bändern und dergleichen, umfassend zwei Endstücke zwischen denen eine mit ihnen verschraubte Gewindespindel angeordnet ist, wobei der axiale Abstand der Endstücke durch Drehen der Gewindespindel mittels einer Ratsche veränderbar ist, wobei ferner an beiden Enden der Gewindespindel gegenläufige Gewindeabschnitte vorgesehen sind, die einerseits als Rechtsgewinde und andererseits als Linksgewinde ausgeführt sind, wobei weiter in den Gewindeabschnitten Gewindestangen der Endstücke gelagert sind, und wobei die eine erste Gewindestange als Rohr ausgebildet ist, in welches die andere zweite Gewindestange eintauchen kann.

Ratschenspanner werden im Bereich der Hebe- und Transporttechnik, insbesondere in Kombination mit Ketten, Seilen oder Bändern vielfältig eingesetzt. Zum Sichern von Ladungen z. B. auf einen LKW werden Zurrketten oder Bänder eingesetzt, die das Transportgut auf dem Transportmittel gegen Verrutschen oder Lösen sichern. An den Enden der Zurrketten oder Bänder sind üblicherweise Befestigungsmittel angebracht, die einerseits mit dem Transportmittel und andererseits mit dem Ladegut verbunden sind. Die Zurrketten oder Bänder werden dann mit Hilfe von Ratschenspanner gespannt.

Ein solcher Ratschenspanner ist beispielsweise aus EP 1 460 306 A1 bekannt. Er umfasst eine Gewindespindel, welche mittels einer Ratsche gegenüber zwei mit ihr verbundenen Endstücken verdreht werden kann. Die rotationssymmetrische Gewindespindel weist an seinen beiden Enden ein Innengewinde auf, wobei die beiden Endstücke an ihren mit der Gewindespindel korrespondierenden Bereichen ein Außengewinde aufweisen.

Jedes der Endstücke kann an seiner der Gewindespindel abgewandten Seite als Ring, in welchem ein Verbindungsglied mit einem Haken oder Verkürzungshaken einhängbar ist, oder als Haken oder Verkürzungshaken ausgebildet sein.

Um durch Verdrehen der Gewindespindel den Abstand zwischen den in den Endstücken eingehängten Haken oder Verkürzungshaken zu verändern, sind die Gewinde an den Enden der Gewindespindel üblicherweise gegenläufig gestaltet. Die Endstücke können nur soweit in die Gewindespindel eingedreht werden, bis die Gewindeenden der Endstücke in der Gewindespindel sich berühren. Dies hat zur Folge, dass der Ratschenspanner entweder eine relativ lange Baulänge besitzt, will man einen zum Erreichen der erforderlichen Spannkraft ausreichenden Spannweg gewährleisten, oder der nutzbare Spannweg ist sehr gering, wenn die Gesamtbaulänge aus anwendungstechnischen Gründen kurz sein muss.

Im gattungsbildenden Stand der Technik nach der US 4 130 269 A geht es um ein teleskopierbares Spannschloss. Etwaige Endanschläge sind diesbezüglich lediglich in Gestalt von sogenannten "set-screws" realisiert. Das kann zu Beschädigungen durch die lediglich punktuelle Anlage führen.

Ausgehend von diesem diskutierten Stand der Technik liegt der Erfindung daher die Aufgabe zugrunde, einen eingangs genannten Ratschenspanner derart weiterzubilden, dass bei möglichst kurzer Baulänge ein ausreichender Spannweg gewährleistet wird.

Diese Aufgabe wird erfindungsgemäß für einen Ratschenspanner der eingangs genannten Art dadurch gelöst, dass als Endanschlag am Ende der zweiten Gewindestange ein Sprengring angebracht ist, der im Durchmesser größer ist als der Gewindedurchmesser des zugehörigen Gewindeabschnittes. Die Innengewinde der Gewindespindel weisen unterschiedliche Durchmesser auf.

Gemäß einer weiteren Ausgestaltung des Ratschenspanners verfügt die Gewindespindel über mindestens eine Feststellschraube, die verhindert, dass eine Drehung zwischen Endstück und Gewindespindel erfolgen kann.

Nachfolgend ist die Erfindung anhand eines Ausführungsbeispiels unter Bezugnahme auf die beigefügten Figuren beschrieben. Es zeigen:
Fig. 1: eine schematisierte teils geschnittene Ansicht des Ratschenspanners im eingefahrenen Zustand.
Fig. 2: eine schematisierte teils geschnittene Ansicht des Ratschenspanners im ausgefahrenen Zustand.
Fig. 3: eine schematisierte teils geschnittene Ansicht des Rohrabschnittes 17.

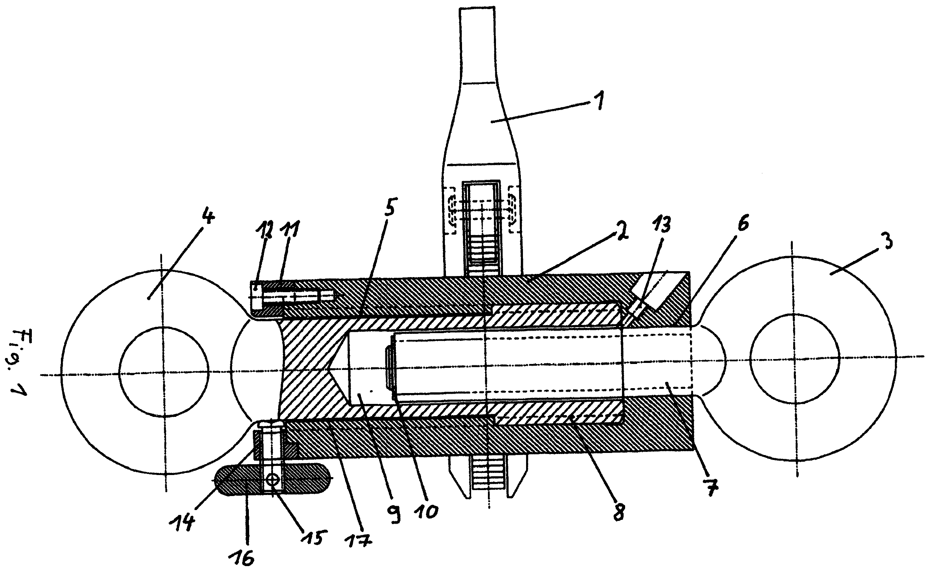

Fig. 1 zeigt einen Ratschenspanner im eingefahrenen Zustand mit einer aus dem Stand der Technik bekannten Ratsche 1, mit der die rohrförmige Gewindespindel 2 gegenüber den zwei mit ihr verbundene Endstücke 3 und 4 verdreht werden kann. An den beiden Enden der Gewindespindel 2 sind gegenläufige Gewindeabschnitte 5 und 6 vorgesehen, die einerseits als Rechtsgewinde andererseits als Linksgewinde ausgeführt sind. In den Gewindeabschnitten 5 und 6 sind die Gewindestangen 7 und 8 der Endstücke 3 und 4 gelagert. Die Endstücke 3 und 4 besitzen an den den Gewindeabschnitten gegenüberliegenden Enden jeweils Befestigungsbauteile, die als Anschlagauge, oder hier nicht dargestellte Gabel ausgeführt sein können, an dem die Zurrketten oder Bänder befestigt werden.

Durch ein Verdrehen der Gewindespindel 2 werden die Endstücke 3 und 4 gleichzeitig, je nach Drehrichtung der Gewindespindel 2, in die Gewindespindel 2 hineingedreht oder herausgedreht, wodurch sich der axiale Abstand der Befestigungsbauteile ändert und die Zurrkette oder das Band gelockert oder gespannt wird. Damit die Endstücke 3 und 4 bei jeder Umdrehung der Gewindespindel 2 die gleiche axiale Längenveränderung machen, werden die Gewindeabschnitte 5 und 6 mit gleicher Steigung ausgeführt.

Die Gewindestange 8 des Endstückes 4 ist mit einer Bohrung 9 ausgeführt. Die Bohrung 9 ist so dimensioniert, dass die Gewindestange 7 des Endstückes 3 in die Bohrung 9 eintauchen kann. So kann die Gewindestange 2 mit einer sehr kurzen Länge ausgeführt werden.

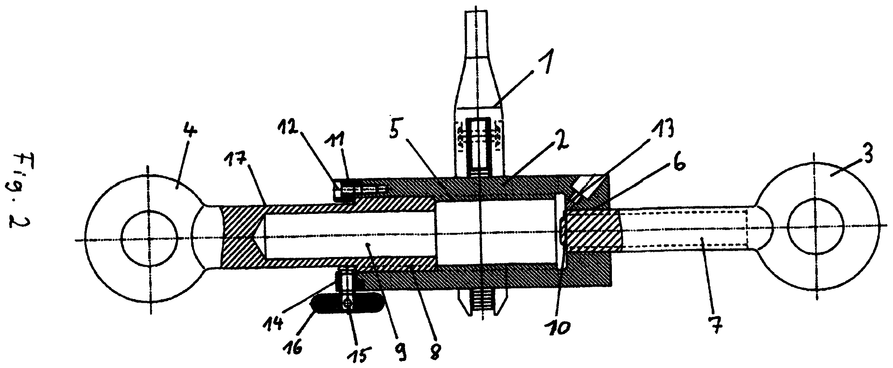

Fig. 2 zeigt einen Ratschenspanner mit max. ausgefahrenen Endstücken 3 und 4. Um ein versehentliches komplettes Herausdrehen der Gewindestangen 7 und 8 aus der Gewindespindel 2 zu verhindern, sind entsprechende Endanschläge 10 und 11 an den Enden der Gewindestange 7 und an der Gewindespindel 2 vorgesehen. Als Endanschlag an Gewindestange 7 wird am Ende der Gewindestange ein Sprengring 10 angebracht, der im Durchmesser größer ist als der Gewindedurchmesser des Gewindeabschnittes 6. Als Endanschlag für Gewindestange 8 dient ein Abschlussdeckel 11, der mit min. 2 Schrauben 12 an der Gewindespindel 2 befestigt ist. Der Innendurchmesser des Abschlussdeckels 11 ist kleiner als der Außendurchmesser des Gewindes der Gewindestange 8.

Da Ratschenspanner oft Witterungseinflüssen ausgesetzt sind, ist ein Nachschmieren erforderlich. Zu diesem Zweck ist in der Gewindespindel 2 eine Schmierbohrung 13 vorgesehen. Die Schmierbohrung 13 kann mit einer hier nicht dargestellten Verschlussschraube oder einem Schmiernippel geschlossen werden.

Um ein Lösen des Ratschenspanners durch selbsttätiges Ausdrehen der Endstücke 3 und 4 aus der Gewindespindel 2, z. B. durch Erschütterungen, zu verhindern, ist eine Ausdrehsicherung erforderlich. Zu diesem Zweck wird in dem Abschlussdeckel 11 eine Gewindebohrung 14 vorgesehen, in der sich ein Gewindebolzen 15 mittels Handrad 16 ein- und ausdrehen lässt.

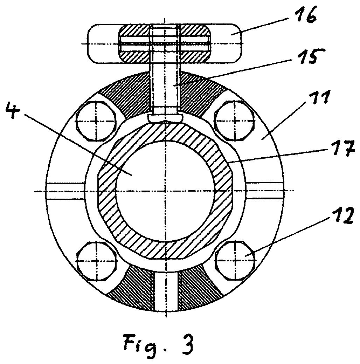

In Fig. 3 ist die Anordnung in einem vergrößerten Ausschnitt dargestellt. Wird der Gewindebolzen 15 über das Handrad 16 soweit eingedreht, dass es auf dem gewindefreien Rohrabschnitt 17 des Endstückes 4 aufsteht, sind Endstück 4 und Abschlussdeckel 11 formschlüssig mit einander verbunden, ein Verdrehen der Gewindespindel und somit das Lösen des Ratschenspanners durch selbsttätiges Drehen ist hierdurch verhindert. Um eine formschlüssige Verbindung zu gewährleisten, ist der gewindefreie Rohrabschnitt 17 als Vieleck ausgebildet.

## Patentansprüche

1. Ratschenspanner zum Spannen von Ketten, Bändern und dergleichen, umfassend zwei Endstücke (3, 4) zwischen denen eine mit ihnen verschraubte Gewindespindel (2) angeordnet ist, wobei
- der axiale Abstand der Endstücke (3, 4) durch Drehen der Gewindespindel (2) mittels einer Ratsche (1) veränderbar ist, wobei ferner
- an beiden Enden der Gewindespindel (2) gegenläufige Gewindeabschnitte (5, 6) vorgesehen sind, die einerseits als Rechtsgewinde und andererseits als Linksgewinde ausgeführt sind, wobei weiter
- in den Gewindeabschnitten (5, 6) Gewindestangen (7, 8) der Endstücke (3, 4) gelagert sind, und wobei
- die eine erste Gewindestange (8) als Rohr ausgebildet ist, in welches die andere zweite Gewindestange (7) eintauchen kann,
dadurchgekennzeichnet, dass
- als Endanschlag am Ende der zweiten Gewindestange (7) ein Sprengring (10) angebracht ist, der im Durchmesser größer ist als der Gewindedurchmesser des zugehörigen Gewindeabschnittes (6).

2. Ratschenspanner nach Anspruch 1 **dadurch gekennzeichnet, dass** die Gewindeabschnitte (5, 6) der Gewindespindel (2) gleiche Steigungen aufweisen.

3. Ratschenspanner nach Anspruch 1 oder 2, **dadurch gekennzeichnet, dass** als Endanschlag der Gewindespindel (2) ein Abschlussdeckel (11) mittels min. 2 Schrauben (12) an der Gewindespindel (2) angebracht ist, deren Innendurchmesser kleiner ist als der Außendurchmesser des Gewindes der Gewindestange (8).

4. Ratschenspanner nach einem der Ansprüche 1 bis 3, **dadurch gekennzeichnet, dass** in der Gewindespindel (2) eine Gewindebohrung (13) vorgesehen ist, durch die im Bedarfsfall den Gewindeabschnitten (5, 6) Schmiermittel zugefügt werden kann.

5. Ratschenspanner nach Anspruch 4, **dadurch gekennzeichnet, dass** die Gewindebohrung (13) durch eine Verschlussschraube oder einen Schmiernippel verschlossen wird.

6. Ratschenspanner nach einem der Ansprüche 1 bis 5, **dadurch gekennzeichnet, dass** im Abschlussdeckel (11) eine Gewindebohrung (14) vorgesehen ist.

7. Ratschenspanner nach Anspruch 6, **dadurch gekennzeichnet, dass** in die Gewindebohrung (14) ein Gewindebolzen (15) eingebracht ist.

8. Ratschenspanner nach Anspruch 7, **dadurch gekennzeichnet, dass** sich der Gewindebolzen (15) mittels eines Handrades (16) drehen lässt.

9. Ratschenspanner nach einem der Ansprüche 1 bis 8, **dadurch gekennzeichnet, dass** ein gewindefreier Rohrabschnitt (17) als Vieleck ausgebildet ist.

## Claims

1. Ratchet tightener for tensioning chains, straps and suchlike, comprising two end pieces (3, 4) between which a threaded spindle (2) screwed thereto is arranged, wherein,
- the axial distance between the end pieces (3, 4) is adjustable through turning the threaded spindle (2) by means of a rachet (1), wherein, in addition
- at both ends of the threaded spindle (2) opposite threaded sections (5, 6) are provided, one configured as a right-hand thread and the other as a left-hand thread, wherein, still further
- threaded rods (7, 8) of the end pieces (3, 4) are borne in the threaded sections (5, 6) and wherein
- the one, first, threaded rod (8) is designed as a tube into which the other, second, threaded rod (7) can be inserted,
**characterised in that**
- as an end stop, at the end of the second threaded rod (7) a circlip (10) is applied which is greater in diameter than the thread diameter of the appurtenant threaded section (6).

2. Ratchet tightener according to claim 1, **characterised in that** the threaded sections (5, 6) of the threaded spindle (2) have the same pitches.

3. Ratchet tightener according to claim 1 or 2, **characterised in that** as an end stop of the threaded spindle (2), an end cap (11) is applied by means of at least 2 screws (12) to the threaded spindle (2), the inner diameter of which is smaller than the outer diameter of the thread of the threaded rod (8).

4. Ratchet tightener according to any one of claims 1 to 3, **characterised in that** in the threaded spindle (2) a threaded bore (13) is provided through which, if required, lubricant can be supplied to the threaded sections (5, 6).

5. Ratchet tightener according to claim 4, **characterised in that** the threaded bore (13) is closed off by a screw plug or a lubricating nipple.

6. Ratchet tightener according to any one of claims 1 to 5, **characterised in that** in the end cap (11) a threaded bore (14) is provided.

7. Ratchet tightener according to claim 6, **characterised in that** a threaded bolt (15) is introduced into the threaded bore (14).

8. Ratchet tightener according to claim 7, **characterised in that** the threaded bolt (15) can be turned by means of a hand wheel (16).

9. Ratchet tightener according to any one of claims 1 to 8, **characterised in that** a thread-free tube section (17) is configured as a polygon.

## Revendications

1. Tendeur d'arrimage, destiné à tendre des chaînes, des bandes ou similaires, comprenant deux pièces d'extrémité (3, 4) entre lesquelles est placée une broche filetée (2) vissée avec elles,
- l'écart axial entre lespièces d'extrémité (3, 4) étant modifiable par rotation de la broche filetée (2) au moyen d'un cliquet (1), par ailleurs
- sur les deux extrémités de la broche filetée (2) étant prévus des tronçons filetés (5, 6) en sens opposé, qui sont réalisés d'une part en tant que filet à droite et d'autre part en tant que filet à gauche,
en outre
- dans les tronçons filetés (5, 6) étant logées des tiges filetées (7, 8) des pièces d'extrémité (3, 4), et
- l'une première tige filetée (8) étant conçue sous la forme d'un tube dans laquelle peut plonger l'autre deuxième tige filetée (7),
**caractérisé en ce que**
- en tant que butée finale sur l'extrémité de la deuxième tige filetée (7) est montée une bague de retenue (10) dont le diamètre est supérieur au diamètre du filetage du tronçon fileté (6) correspondant.

2. Tendeur d'arrimage selon la revendication 1, **caractérisé en ce que** les tronçons filetés (5, 6) de la broche filetée (2) comportent des pas identiques.

3. Tendeur d'arrimage selon la revendication 1 ou 2, **caractérisé en ce qu'**en tant que butée finale de la broche filetée (2), un couvercle de fermeture (11) est monté sur la broche filetée (2) au moyen d'un minimum de 2 vis (12), dont le diamètre intérieur est inférieur au diamètre extérieur du filetage de la tige filetée (8).

4. Tendeur d'arrimage selon l'une quelconque des revendications 1 à 3, **caractérisé en ce que** dans la broche filetée (2) est prévu un perçage taraudé (13), à travers lesquels, en cas de besoin, du lubrifiant peut être rajouté aux tronçons filetés (5, 6).

5. Tendeur d'arrimage selon la revendication 4, **caractérisé en ce qu'**on ferme le perçage taraudé (13) par une vis de fermeture ou un graisseur.

6. Tendeur d'arrimage selon l'une quelconque des revendications 1 à 5, **caractérisé en ce que** dans le couvercle de fermeture (11) est prévu un perçage taraudé (14).

7. Tendeur d'arrimage selon la revendication 6, **caractérisé en ce que** dans le perçage taraudé (14) est introduit un boulon fileté (15).

8. Tendeur d'arrimage selon la revendication 7, **caractérisé en ce que** le boulon fileté (15) peut être mis en rotation au moyen d'un volant (16).

9. Tendeur d'arrimage selon l'une quelconque des revendications 1 à 8, **caractérisé en ce qu'**un tronçon tubulaire (17) non fileté est conçu sous la forme d'un polygone.
